# EUROPEAN PATENT APPLICATION

(11) **EP 4 579 479 A1**
(43) Date of publication of application: **02.07.2025**
(21) Application number: 23910860.8
(22) Date of filing: 28.12.2023
(51) Int. Cl.: G06F 16/242

(54) **DISPLAY METHOD AND APPARATUS**

(30) Priority: 30.12.2022 CN 202211735651
(71) Applicant: Huawei Technologies Co., Ltd., Shenzhen, Guangdong 518129 (CN)
(72) Inventor: XIA, Bin, Shenzhen, Guangdong 518129 (CN)
(74) Representative: Thun, Clemens
(86) International application number: PCT/CN2023/142874
(87) International publication number: WO 2024/140945

(57) **Abstract**

This application discloses a display method and an apparatus. An electronic device obtains a search word entered by a user. The electronic device obtains a first search result and a second search result from a server based on the search word. The electronic device retrieves, based on the search word, in data stored in the electronic device to obtain a third search result. The first search result and the third search result belong to a same type, and the second search result and the first search result belong to different types. The electronic device displays a search result page, where the search result page includes a first area and a second area, the first area displays the first search result and the third search result, and the second area displays the second search result. In this way, the electronic device displays the search results based on the types of the search results, to facilitate searching, by the user, for a search result of a same type.

## Description

This application claims priority to Chinese Patent Application No. 202211735651.6, filed with the China National Intellectual Property Administration on December 30, 2022, and entitled "DISPLAY METHOD AND APPARATUS", which is incorporated herein by reference in its entirety.

### TECHNICAL FIELD

This application relates to the field of terminals, and in particular, to a display method and an apparatus.

### BACKGROUND

Nowadays, most electronic devices can provide search functions for users. An electronic device may receive a search word entered by a user, and retrieve, based on the search word, in data stored in the electronic device, to obtain a search result associated with the search word. In this way, the user can quickly search, by using a search function provided by the electronic device, for an application installed on the electronic device, for data in the application, or for the like. However, the electronic device can provide, for the user, only a search result obtained based on locally stored data, a search range is small, and content of the search result is little.

### SUMMARY

This application provides a display method and equipment. An electronic device obtains a search word entered by a user. The electronic device obtains a first search result and a second search result from a server based on the search word. The electronic device retrieves, based on the search word, in data stored in the electronic device to obtain a third search result. The first search result and the third search result belong to a same type, and the second search result and the first search result belong to different types. The electronic device displays a search result page, where the search result page includes a first area and a second area, the first area displays the first search result and the third search result, and the second area displays the second search result. In this way, the electronic device displays the search results based on the types of the search results, to facilitate searching, by the user, for a search result of a same type.

According to a first aspect, this application provides a display method, including: An electronic device obtains a search word entered by a user;
the electronic device sends a data query message to a server, where the data query message includes the search word, and obtains a first search result and a second search result from the server,
the electronic device retrieves, based on the search word, in data stored in the electronic device to obtain a third search result, where the first search result and the third search result belong to a same type, and the second search result and the first search result belong to different types; and
the electronic device displays a search result page, where the search result page includes a first area and a second area, the first area displays the first search result and the third search result, and the second area displays the second search result. In this way, the electronic device can place the search results in different areas of the search result page based on the types of the search results, and place search results that are in search results of the server and the electronic device and that are of a same type together, to facilitate searching for a search result of the type.

In a possible implementation, the method further includes: arranging the first area before the second area when the electronic device is in a first time period, where a weight of the first search result and/or a weight of the third search result in the first time period are/is greater than a weight of the second search result in the first time period. In this way, based on a time period, the electronic device determines, from search results of different types in the time period, a search result that is to be displayed at the top. The electronic device may record a type of a search result that is frequently tapped in each time period, and when receiving, in the time period, the search word entered by the user, place a search result of a corresponding type at the top, to improve efficiency of searching, by the user, for a target search result.

In a possible implementation, the method further includes: arranging the first search result before the third search result when the electronic device is in the first time period, where the weight of the first search result in the first time period is greater than the weight of the third search result in the first time period. In this way, based on a time period, the electronic device determines, from search results of a same type in the time period, a search result that is to be displayed at the top. The electronic device may record a search result that is frequently tapped in each time period, and when receiving, in the time period, the search word entered by the user, place a corresponding search result at the top, to improve efficiency of searching, by the user, for the target search result.

In a possible implementation, the method further includes: arranging the first area before the second area when the electronic device is located at a first position, where a weight of the first search result and/or a weight of the third search result at the first position are/is greater than a weight of the second search result at the first position. In this way, based on a place in which the electronic device is located, the electronic device determines, from search results of different types in the place, a search result that is to be displayed at the top. The electronic device may record a type of a search result that is frequently tapped in the place, and when receiving, in the place, the search word entered by the user, place a search result of the type at the top, to improve efficiency of searching, by the user, for the target search result.

In a possible implementation, the method further includes: arranging the first search result before the third search result when the electronic device is located at the first position, where the weight of the first search result at the first position is greater than the weight of the third search result at the first position. In this way, based on a place in which the electronic device is located, the electronic device determines, from search results of a same type in the place, a search result that is to be displayed at the top. The electronic device may record a search result that is frequently tapped in the place, and when receiving, in the place, the search word entered by the user, place, at the top, the search result that is frequently tapped by the user, to improve efficiency of searching, by the user, for the target search result.

In a possible implementation, the method further includes: the type of the first search result and the third search result is a first type, the first area is located before the second area, and a weight of the type corresponding to the first search result and the third search result is greater than a weight of a type corresponding to the second search result. In this way, the electronic device can record a type of a search result that is most frequently tapped, and display a search result of the type at the top, to increase a possibility that the user obtains the target search result, thereby improving efficiency of searching, by the user, for the target search result.

In a possible implementation, the first search result includes a display style of the first search result, and that the electronic device displays a search result page specifically includes: The electronic device displays the search result page according to the display style of the first search result.

In this way, the electronic device can display the search result page according to the style that is of the search result and that is delivered by the server, and the display style is unified and more aesthetic.

In a possible implementation, the method further includes:
The electronic device obtains a device-cloud convergence policy from the server, where the device-cloud convergence policy indicates the electronic device to converge the search results based on the types corresponding to the search results. In this way, when obtaining the search result from the server, the electronic device can obtain the device-cloud convergence policy, and process the obtained search results based on the latest device-cloud convergence policy.

In a possible implementation, before that an electronic device receives a search word entered by a user, the method further includes:
The electronic device receives a first operation;
in response to the first operation, the electronic device displays a search box and sends a policy request message to the server, where the search box is used to enter the search word, and the policy request message indicates the server to send a device-cloud convergence policy to the electronic device; and
the electronic device receives the device-cloud convergence policy, where the device-cloud convergence policy indicates the electronic device to converge the search results based on the types corresponding to the search results. In this way, the electronic device can obtain the device-cloud convergence policy from the server before receiving the search word, so that the electronic device immediately converges the search results based on the device-cloud convergence policy after obtaining the search results.

According to a second aspect, this application provides an apparatus, including a display module, a processing module, a storage module, and a communication module, where
the processing module is configured to obtain a search word entered by a user;
the communication module is configured to send a data query message to a server, where the data query message includes the search word;
the communication module is further configured to receive a first search result and a second search result that are sent by the server;
the processing module is configured to retrieve, based on the search word, in data stored in the storage module to obtain a third search result, where the first search result and the third search result belong to a same type, and the second search result and the first search result belong to different types; and
the display module is configured to display a search result page, where the search result page includes a first area and a second area, the first area displays the first search result and the third search result, and the second area displays the second search result.

In a possible implementation, the first area is arranged before the second area when the processing module is in a first time period, where a weight of the first search result and/or a weight of the third search result in the first time period are/is greater than a weight of the second search result in the first time period.

In a possible implementation, the first search result is arranged before the third search result when the processing module is in the first time period, where the weight of the first search result in the first time period is greater than the weight of the third search result in the first time period.

In a possible implementation, the first area is arranged before the second area when the processing module is located at a first position, where a weight of the first search result and/or a weight of the third search result at the first position are/is greater than a weight of the second search result at the first position.

In a possible implementation, the first search result is arranged before the third search result when the processing module is located at the first position, where the weight of the first search result at the first position is greater than the weight of the third search result at the first position.

In a possible implementation, the type of the first search result and the third search result is a first type, the first area is located before the second area, and a weight of the type corresponding to the first search result and the third search result is greater than a weight of a type corresponding to the second search result.

In a possible implementation, the first search result includes a display style of the first search result, and the display module is specifically configured to display the search result page according to the display style of the first search result.

In a possible implementation, the communication module is further configured to obtain a device-cloud convergence policy from the server, where the device-cloud convergence policy indicates the processing module to converge the search results based on the types corresponding to the search results.

In a possible implementation, the processing module is further configured to receive a first operation before the processing module receives the search word entered by the user;
the processing module is further configured to: in response to the first operation, notify the display module to display a search box and notify the communication module to send a policy request message to the server, where the search box is used to enter the search word, and the policy request message indicates the server to send a device-cloud convergence policy to the electronic device;
the display module is configured to display the search box;
the communication module is configured to send the policy request message to the server; and
the communication module is further configured to receive the device-cloud convergence policy, where the device-cloud convergence policy indicates the processing module to converge the search results based on the types corresponding to the search results.

According to a third aspect, this application provides an electronic device, including a display screen, one or more processors, and one or more memories. The display screen, the one or more memories, and the one or more processors are coupled to each other, the one or more memories are configured to store computer program code, the computer program code includes computer instructions, and when the one or more processors execute the computer instructions, the communication apparatus is enabled to perform the display method in any possible implementation of any one of the foregoing aspects.

According to a fourth aspect, this application provides a computer storage medium, including computer instructions. When the computer instructions are run on an electronic device, the communication apparatus is enabled to perform the display method in any possible implementation of any one of the foregoing aspects.

According to a fifth aspect, this application provides a computer program product. When the computer program product is run on a computer, the computer is enabled to perform the display method in any possible implementation of any one of the foregoing aspects.

### BRIEF DESCRIPTION OF DRAWINGS

FIG. 1 is a diagram of a communication system 10 according to an embodiment of this application;
FIG. 2 is a schematic flowchart of a method according to an embodiment of this application;
FIG. 3A to FIG. 3E are a group of diagrams of interfaces according to an embodiment of this application;
FIG. 4 is a schematic flowchart of a display method according to an embodiment of this application;
FIG. 5A and FIG. 5B are a schematic flowchart according to an embodiment of this application;
FIG. 6A and FIG. 6B are another group of diagrams of interfaces according to an embodiment of this application;
FIG. 7A and FIG. 7B are a schematic flowchart of another method according to an embodiment of this application;
FIG. 8 is a schematic flowchart of another method according to an embodiment of this application;
FIG. 9 is a schematic flowchart of another method according to an embodiment of this application;
FIG. 10 is a diagram of an interface according to an embodiment of this application; and
FIG. 11 is a diagram of a hardware structure of an electronic device 100 according to an embodiment of this application.

### DESCRIPTION OF EMBODIMENTS

The technical solutions in embodiments of this application are clearly described in detail below with reference to the accompanying drawings. In descriptions of embodiments of this application, unless otherwise stated, "/" means "or", for example, A/B may represent A or B. The term "and/or" in the text describes only an association relationship between associated objects, and indicates that three relationships may exist. For example, A and/or B may represent three cases: Only A exists, both A and B exist, and only B exists.

Hereinafter, the terms "first" and "second" are used only for descriptive purposes, and cannot be understood as indicating or implying relative importance or implicitly indicating a quantity of indicated technical features. Therefore, features defined by "first" and "second" may explicitly or implicitly include one or more of the features. In the descriptions of embodiments of this application, "a plurality of" means two or more unless otherwise stated.

The following describes a communication system 10 in embodiments of this application.

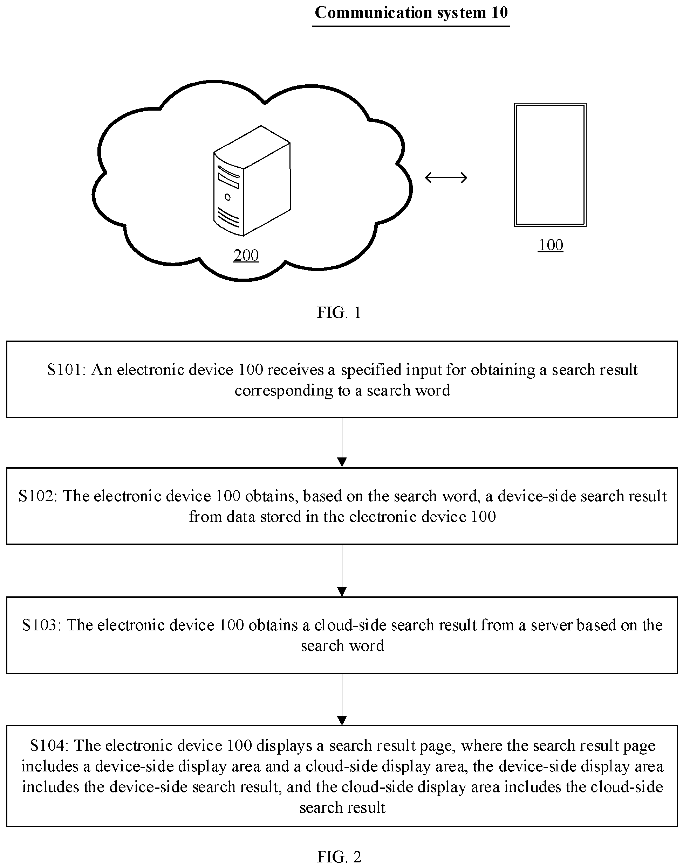

FIG. 1 is an example of a diagram of a structure of a communication system 10 according to an embodiment of this application. As shown in FIG. 1, the communication system 10 includes an electronic device 100 and a server 200.

In some embodiments, the electronic device 100 may establish a communication connection to the server 200 through a network access device based on a connection manner of wired connection or Wi-Fi connection. For example, the network access device may be a third-party device such as a router, a gateway, or an intelligent device controller. The server 200 may be a hardware server, or may be a cloud server implanted in a virtualized environment. The electronic device 100 may perform data transmission with the server 200 through a network interface.

In this embodiment of this application, after receiving an input of a user for obtaining a search result of a search word, the electronic device 100 may send a data request message to the server 200, where the data request message includes the search word entered by the user. The server 200 may obtain a cloud-side search result through retrieval based on the search word, and send the cloud-side search result to the electronic device 100. The cloud-side search result is a data result obtained by the server 200 from each application server and webpage server, and the like based on the search word.

It may be understood that the structure shown in this embodiment does not constitute a specific limitation on the communication system 10. In some other embodiments of this application, the communication system 10 may include more devices than those shown in the figure.

In a possible implementation, after receiving the input of the user for searching for a search result of a specified search word, the electronic device 100 may query, by using a search engine of the electronic device 100, data stored in the electronic device 100, to obtain a device-side search result. The electronic device 100 may further send a query request to the server, where the query request includes the search word, to obtain a cloud-side search result returned by the server. The device-side search result is data that is related to the search word and that is in the data stored in the electronic device 100, and the cloud-side search result is data that is related to the search word and that is in data of the server. The electronic device 100 may display a search result interface, display the device-side search result in a device-side display area of the search result interface, and display the cloud-side search result in a cloud-side display area of the search result interface. In this way, if the electronic device 100 provides only the device-side search result, there may be no content desired by the user, and the user needs to perform a search operation again by using a browser application. Herein, the electronic device 100 may provide more search results for the user based on the device-side search result and the cloud-side search result. In this way, the user obtains more search results through one search operation, so that the user finds desired content more quickly.

Specifically, as shown in FIG. 2, steps in which the electronic device 100 obtains and displays the search result interface based on the specified search word are as follows:
S101: The electronic device 100 receives a specified input for obtaining a search result corresponding to a search word.

The electronic device 100 may display a search box and a search control on a display screen, where the search box is used to enter the search word. The electronic device 100 may display, in the search box, the search word entered by the user. The search control may be configured to trigger the electronic device 100 to query the search result corresponding to the search word. The electronic device 100 may receive the specified input (for example, a tap or click) of the user for the search control, and perform step S102 and step S103.

S102: The electronic device 100 obtains, based on the search word, a device-side search result from data stored in the electronic device 100.

The electronic device 100 may obtain the device-side search result from local data of the electronic device 100 through retrieval by using a device-side search engine.

S103: The electronic device 100 obtains a cloud-side search result from the server based on the search word.

The electronic device 100 may send a query request to the server, where the query request includes the search word entered by the user. The server may query a related database based on the search word, to obtain the cloud-side search result, and send the cloud-side search result to the electronic device 100.

It should be noted that the electronic device 100 may simultaneously perform step S102 and step S103, or may first perform step S102 or step S103. This is not limited in this embodiment of this application.

S104: The electronic device 100 displays the search result page, where the search result page includes the device-side display area and the cloud-side display area, the device-side display area includes the device-side search result, and the cloud-side display area includes the cloud-side search result.

After obtaining the device-side search result and receiving the cloud-side search result that is sent by the server, the electronic device 100 may display the device-side search result and the cloud-side search result on the display screen. The device-side search result and the cloud-side search result that are displayed by the electronic device 100 are in different areas of the search interface page.

In some examples, the electronic device 100 includes a device-side search module. After receiving the search word entered by the user, the device-side search module may perform step S102 to step S104.

The following describes, with reference to an application scenario, the foregoing steps in which the electronic device 100 obtains the search result page.

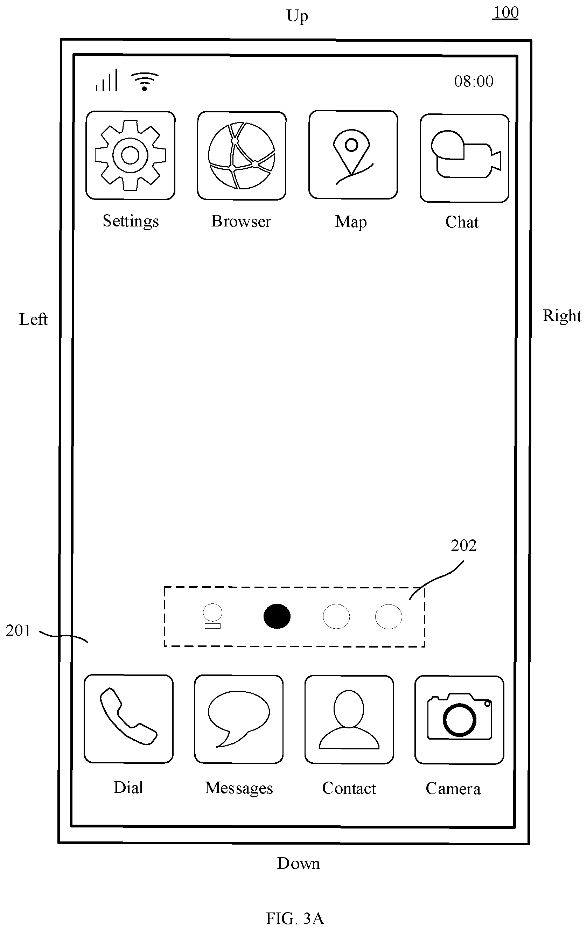

For example, as shown in FIG. 3A, the electronic device 100 displays a page 201 of a desktop. The page 201 includes a plurality of application icons (for example, a setting icon, a browser icon, and the like).

Optionally, a page indicator 202 is further displayed in a floating manner below the page 201 on which the application icons are placed, to indicate a total quantity of pages on the desktop and a position relationship between the currently displayed page 201 and another page on the desktop.

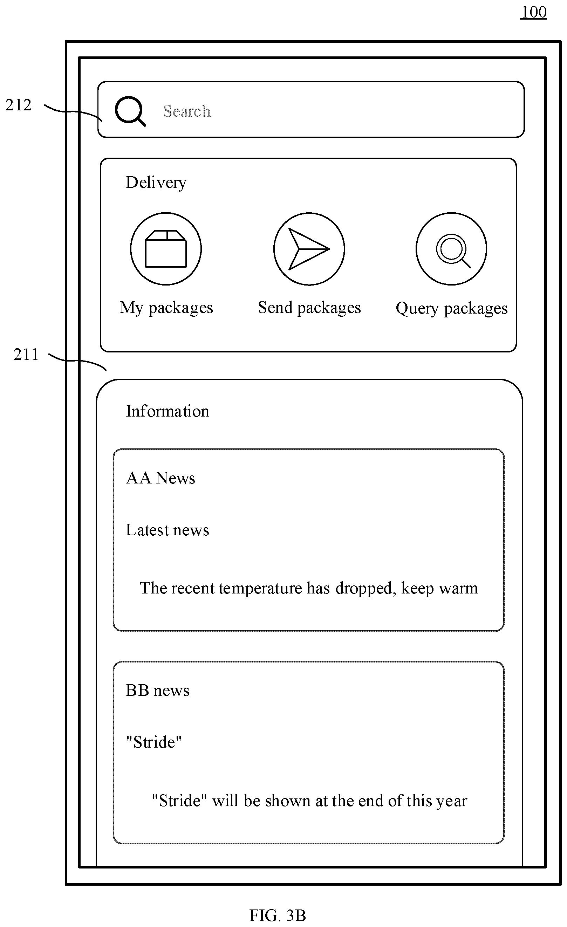

Herein, the desktop of the electronic device 100 includes four pages, and the four pages include the page 201 and a page 211 that is shown in FIG. 3B. The page 211 is a HiBoard, and one or more function components may be displayed on the page 211.

Herein, a black dot in the page indicator is the second on the left, and may indicate that the currently displayed page 201 is the second on the left in the four pages. It should be noted that, when the pages on the desktop include the HiBoard (for example, the page 211), an icon of the HiBoard in the page indicator 202 is different from an icon of another page. Therefore, the first icon on the left in the page indicator 202 is different from the another icon. Optionally, when the pages on the desktop include a home page, an icon of the home page in the page indicator 202 is different from an icon of another page. The home page is a page in pages other than the HiBoard in the plurality of pages on the desktop. It may be understood that icons that are of pages other than the HiBoard and the home page and that are in the page indicator 202 are all the same. When the electronic device 100 displays the HiBoard (for example, the page 211), the page indicator may not be displayed.

It should be noted that, when pages displayed on the display screen of the electronic device 100 are different, positions of black dots in the page indicator 202 are also different. It should be further noted that the electronic device 100 may receive a user input, to add or reduce pages on the desktop. When a quantity of pages on the desktop changes, a quantity of icons in the page indicator 202 also changes accordingly. Herein, that the desktop includes four pages is merely an example, and this should not constitute a limitation on the quantity of pages on the desktop.

Optionally, a status bar may be further displayed above the page on which the application icons are placed. The status bar includes one or more status indicators. The one or more status indicators may include but are not limited to a strength indicator of a communication signal (for example, a cellular network signal or a WLAN signal), a time indicator, a battery level indicator, a positioning function enabling indicator, a flight function enabling indicator, a notification sign indicator (indicating an application corresponding to a notification message), and the like. Optionally, a dock (dock) area may be displayed below the page indicator, the dock area may include one or more dock icons, and the one or more dock icons in the dock area may remain displayed during page switching. It should be noted that when the electronic device 100 switches to display the HiBoard (for example, the page 211), the dock area may not be displayed.

After receiving an input (for example, flicking rightward) of the user for switching to display the HiBoard, the electronic device 100 may display, in response to the input, the page 211 shown in FIG. 3B.

As shown in FIG. 3B, the page 211 includes a search box 212. The search box 212 may be configured to receive and display the search word entered by the user. One or more function components may be further displayed on the page 211, and the function component is a component that is provided by the electronic device 100 and that triggers a function of an application.

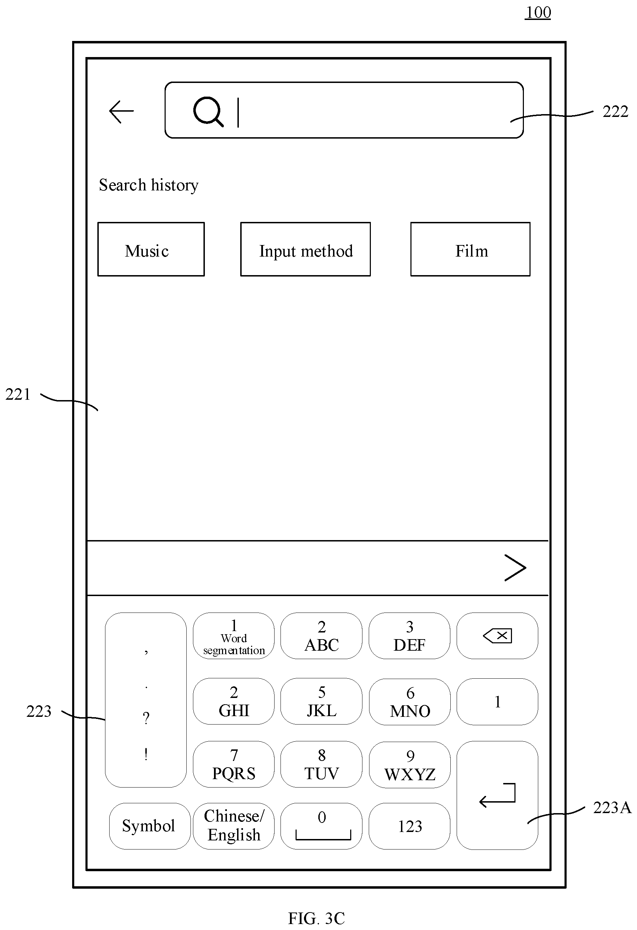

After receiving an input (for example, a tap) of the user for the search box 212, the electronic device 100 may display, in response to the input, a page 221 shown in FIG. 3C.

As shown in FIG. 3C, the page 221 is a search page provided by the electronic device 100. The page 221 includes a search box 222. The electronic device 100 further displays a virtual keyboard 223, where the virtual keyboard 223 may include one or more virtual keys, and the one or more virtual keys include a virtual key 223A. The virtual keyboard 223 may be configured to: receive an input of the user, and send text information entered by the user to the search box 222. The virtual keyboard 223 is provided by an input method application of the electronic device 100. Herein, the search box 222 is in a selected state, and the search box 222 may receive, by using the virtual keyboard 223, the search word entered by the user.

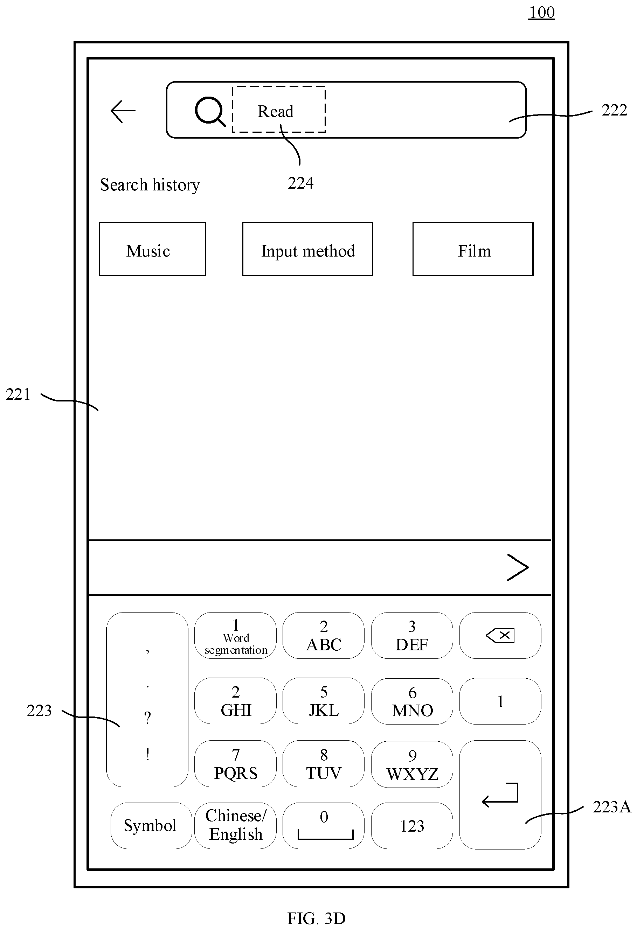

The electronic device 100 may send, to the search box 222, the search word that is entered by the user and that is received based on the virtual keyboard 223, and the search box 222 may display the search word after receiving the search word. As shown in FIG. 3D, the search box 222 displays a search word 224 entered by the user. For example, the search word 224 may be "read".

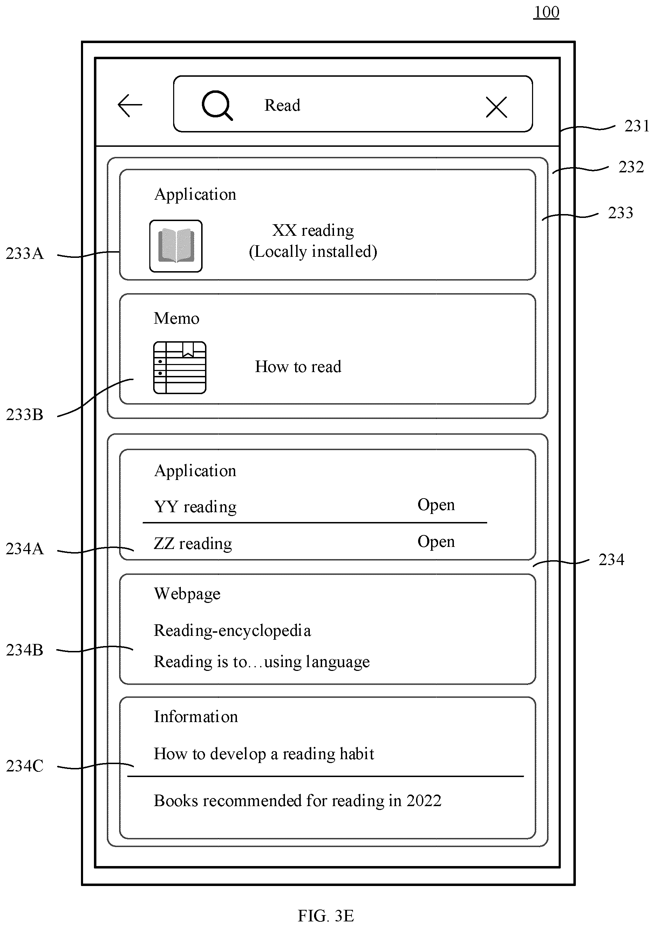

After receiving an input (for example, a tap) of the user for the virtual key 223A shown in FIG. 3D, the electronic device 100 may display, in response to the input, a page 231 shown in FIG. 3E.

As shown in FIG. 3E, the page 231 includes a display area 232, and the display area 232 is used to display a search result obtained by the electronic device 100 based on the search word 224. The display area 232 includes a display area 233 and a display area 234. The display area 233 is used to display one or more device-side result options obtained by the electronic device 100 based on the search word. The one or more device-side result options include a device-side result option 233A and a device-side result option 233B. Each device-side result option corresponds to one type preset by the electronic device 100.

It should be noted that, in this embodiment of this application, a plurality of types are preset in the electronic device 100. The electronic device 100 may classify found data based on the preset types, to obtain the one or more device-side result options. For example, an application type, a file type, a type of each application, and the like may be preset in the electronic device 100. A device-side result option corresponding to the application type may include one or more icons of an application related to the search word, and the icon may be used to trigger the electronic device 100 to display an interface of the application corresponding to the icon. A device-side result option corresponding to the file type includes a file icon of a file whose file name includes the search word in files stored in the electronic device 100. The file icon may be used to trigger the electronic device 100 to open the file corresponding to the icon.

The type of the application may include types of all applications that have been installed on the electronic device 100. For example, if an SMS message application is installed on the electronic device 100, a device-side result option corresponding to the type of the SMS message application includes an SMS message that includes the search word and that is in the SMS message application. For another example, if a memo application is installed on the electronic device 100, a device-side result option corresponding to a type of the memo application includes a note that includes the search word and that is in the memo application, and the like. It may be understood that a quantity of types of applications may change with a quantity of applications installed on the electronic device 100.

It should be further noted that the foregoing preset types are merely examples, and the electronic device 100 may alternatively classify data into different types in another manner, for example, classify the data into different types based on a picture, a video, a document, audio, and the like. This is not limited in this embodiment of this application.

Herein, the device-side result option 233A includes content of one or more search results of the application type. For example, the device-side result option 233A includes an icon of the XX reading application, and the icon may be used to trigger the electronic device 100 to display a page of the XX reading application. The device-side result option 233B includes content of one or more search results of the type of the memo application. For example, the device-side result option 233B includes a note named "how to read" in the memo application.

The display area 234 is used to display one or more cloud-side result options obtained by the electronic device 100 from the server 200 based on the search word. The one or more cloud-side result options include a cloud-side result option 234A and a cloud-side result option 234B. Each cloud-side result option corresponds to one type preset by the server 200.

It should be noted that in this embodiment of this application, a plurality of types are preset in the server 200, and the server 200 may classify found data based on the preset types, to obtain the one or more cloud-side result options. For example, the server 200 may preset an application type, a webpage type, a shopping type, an information type, a video type, a music type, and the like. A cloud-side result option corresponding to the application type may include one or more icons of an application related to the search word, and the icon may be used to trigger the electronic device 100 to display a page of the application corresponding to the icon. It should be noted that an application corresponding to the icon is a cloud application, and the application is not installed on the electronic device 100.

Optionally, the icon may be used to trigger the electronic device 100 to install the application corresponding to the icon, or trigger the electronic device 100 to install and open the application corresponding to the icon.

A cloud-side result option corresponding to the webpage type includes a search result that is related to the search word and that is obtained by using a webpage search engine. The electronic device 100 may display, in response to an input of the user for a search result, a webpage corresponding to the search result.

A cloud-side result option corresponding to the shopping type includes commodity data related to the search word. A cloud-side result option corresponding to the information type includes news information related to the search word. A cloud-side result option corresponding to the video type includes a video related to the search word. A cloud-side result option corresponding to the music type includes a song related to the search word, and the like. It should be noted that the preset types in the server 200 are merely examples, and the server 200 may classify data into more or fewer types. This is not limited in this embodiment of this application.

Herein, the cloud-side result option 234A includes content of one or more search results of the application type. For example, the cloud-side result option 234A includes an icon of the YY reading application, and the icon may be used to trigger the electronic device 100 to display a page of the YY reading application. The cloud-side result option 234A further includes an icon of the ZZ reading application, and the icon may be used to trigger the electronic device 100 to display a page of the ZZ reading application. The cloud-side result option 234B includes search content of the webpage type. For example, the cloud-side result option 234B includes popular encyclopedia information that is related to "reading" and that is obtained through retrieval. The electronic device 100 may jump to display a corresponding webpage in response to an input (for example, a tap) of the user for the popular encyclopedia information.

In this way, because the electronic device 100 directly displays the device-side search result and the cloud-side search result, the device-side search result and the cloud-side search result are separately displayed at different positions of the search result page, the two search results are independent of each other, and the device-side search result and the cloud-side search result cannot be uniformly sorted based on an intention of the user. In this case, sorting cannot be performed in a sorting manner indicated by the intention of the user. For example, if search results of the application type are displayed together, it may be easier for the user to find and obtain desired content.

An embodiment of this application provides a display method. After receiving an input of a user for obtaining a search result of a specified search word, the electronic device 100 may send, to the server 200, a data request message that carries the specified search word. After receiving the data request message, the server 200 obtains a cloud-side search result based on the specified search word, and sends the cloud-side search result to the electronic device 100. The electronic device 100 may obtain, based on the specified search word, a device-side search result from data stored in the electronic device 100. The electronic device 100 may process the cloud-side search result and the device-side search result based on a device-cloud convergence policy, to obtain a converged search result. The electronic device 100 may display a search result page including the converged search result.

Specifically, the cloud-side search result includes a cloud-side search result list, the cloud-side search result list includes one or more cloud-side search result items, the cloud-side search result item includes a type identifier, an intention satisfaction weight, and a result template, and the result template includes type result data and a display style that is of the cloud-side search result item. The type identifier is an identifier of a type corresponding to the cloud-side search result item. The identifier may be a name of the type. The intention satisfaction weight is a weight of the cloud-side search result item, and may indicate importance of the cloud-side search result item in all cloud-side search result items. A larger weight value of the cloud-side search result item indicates higher importance of the cloud-side search result item. The type result data is search result data of a type indicated by the type identifier in the cloud-side search result. The display style of the cloud-side search result item is a style in which the electronic device 100 displays the cloud-side search result item.

In some examples, the cloud-side search result list of the cloud-side search result may be represented as [(type identifier 1, intention satisfaction weight 1, result template 1), (type identifier 2, intention satisfaction weight 2, result template 2), ...]. The cloud-side search result may be represented as {cloud-side search result list [(type identifier 1, intention satisfaction weight 1, result template 1), (type identifier 2, intention satisfaction weight 2, result template 2), ...], device-cloud convergence policy}. The cloud-side search result that is obtained by the electronic device 100 and that is shown in FIG. 3E is used as an example to describe composition of the cloud-side search result list. The cloud-side search result list may be represented as [(application, 0.7, result template 1), (webpage, 0.5, result template 2)]. Optionally, the cloud-side search result may include only the cloud-side search result list.

The device-side search result includes a device-side search result list, the device-side search result list includes one or more device-side search result items, and the device-side search result item includes a type identifier, an intention satisfaction weight, and type result data. The type identifier is an identifier of a type corresponding to the device-side search result item. The identifier may be a name of the type. The intention satisfaction weight is a weight of the device-side search result item, and may indicate importance of the device-side search result item in all device-side search result items. A larger weight value of the device-side search result item indicates higher importance of the device-side search result item. The type result data is search result data of a type indicated by the type identifier in the device-side search result.

In some examples, the device-side search result list of the device-side search result may be represented as [(type identifier 1, intention satisfaction weight 1, type result data 1), (type identifier 2, intention satisfaction weight 2, type result data 2), ...]. The device-side search result may be represented as {device-side search result list [(type identifier 1, intention satisfaction weight 1, type result data 1), (type identifier 2, intention satisfaction weight 2, type result data 2), ...]}. The device-side search result that is obtained by the electronic device 100 and that is shown in FIG. 3E is used as an example to describe composition of the device-side search result list. The device-side search result list may be represented as [(application, 0.8, type result data 1), (memo, 0.3, type result data 2)].

The device-cloud convergence policy may include but is not limited to a scoring convergence policy and a type combination policy. The scoring convergence policy may include device-side sorting first, cloud-side sorting first, sorting based on weights (that is, intention satisfaction weights), and the like. For example, when the scoring convergence policy is device-side sorting first, the electronic device 100 may arrange the device-side search result item before the cloud-side search result item. When the scoring convergence policy is cloud-side sorting first, the electronic device 100 may arrange the cloud-side search result item before the device-side search result item. When the scoring convergence policy is sorting based on weights, the electronic device 100 may arrange, at the top, a search result item with a larger value of the intention satisfaction weight in the search result items.

The type combination policy may include a policy of whether to combine search result items with a same type identifier, and a type sorting policy. When the policy of whether to combine search result items with a same type identifier is to combine search result items with a same type identifier, the electronic device 100 may combine search result items with a same type identifier in the device-side search result and the cloud-side search result, to obtain a converged search result item, where the converged search result item includes type result data of the search result items on the two sides. When the policy of whether to combine search result items with a same type identifier is not to combine search result items with a same type identifier, the electronic device 100 independently displays the search result items with the same type identifier.

It should be noted that a value of an intention satisfaction weight of the converged search result item may be a value of the intention satisfaction weight of the device-side search result item or a value of the intention satisfaction weight of the cloud-side search result item, or an average value of the value of the intention satisfaction weight of the device-side search result item and the value of the intention satisfaction weight of the cloud-side search result item.

The type sorting policy may indicate how the electronic device 100 sorts the type result data of the device-side search result item and the type result data of cloud-side search result item in the converged search result item. The type sorting policy may include sorting based on intention satisfaction weights, device-side sorting first, cloud-side sorting first, and the like. For example, when the type sorting policy is sorting based on intention satisfaction weights, the electronic device 100 may sort the type result data based on the value of the intention satisfaction weight of the device-side search result item and the value of the intention satisfaction weight of the cloud-side search result item.

It should be noted that type identifiers of different types are different, and type identifiers of a same type in the server 200 and the electronic device 100 are the same. Optionally, the type identifier may include a name of the type and an identity (identity, ID) of the type. The ID of the type may be a code obtained through negotiation between the server 200 and the electronic device 100.

In this way, based on the device-cloud convergence policy, the electronic device 100 combines some search result items in the search results on the device side and the cloud side, so that the user can obtain all search results of a specific type more quickly. The electronic device 100 may further display a search result item with a larger weight value at the top of the search result page based on weights of the search result items on the device side and the cloud side, so that the user can find a desired search result item more quickly.

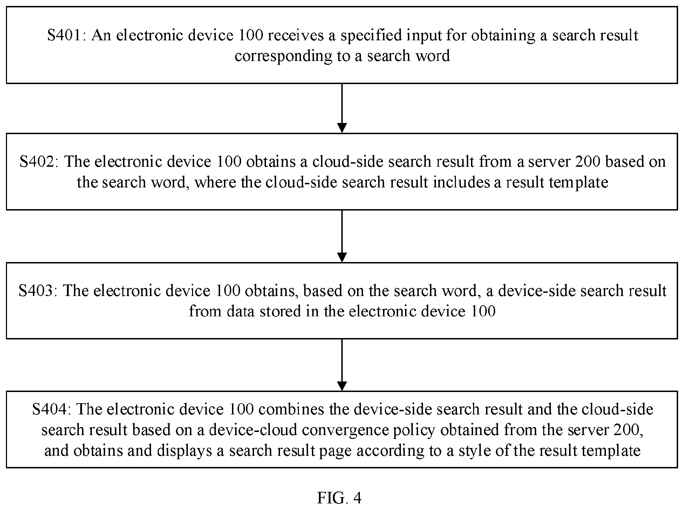

For example, as shown in FIG. 4, a display method provided in an embodiment of this application may include the following steps.

S401: The electronic device 100 receives a specified input for obtaining a search result corresponding to a search word.

When a search box of the electronic device 100 includes the search word entered by the user, the specified input may be an input for an OK key of the virtual keyboard, for example, an input (for example, a tap) for the virtual key 223A shown in FIG. 3D.

When the electronic device 100 displays the search box and a search control corresponding to the search box, the specified input may be an input (for example, a tap) for the search control.

The specified input is not limited to the foregoing specified inputs. The specified input may alternatively be a voice input. For example, the specified input may be a voice instruction input for a search keyword "read", or the like. This is not limited in this embodiment of this application.

S402: The electronic device 100 obtains a cloud-side search result from the server 200 based on the search word, where the cloud-side search result includes a result template.

Specifically, the electronic device 100 may send a data request message to the server 200, where the data request message includes the search word. After receiving the data request message sent by the electronic device 100, the server 200 may retrieve in data related to the search word in each website, to obtain the cloud-side search result. Then, the server 200 may send the cloud-side search result to the electronic device 100. For description of the cloud-side search result, refer to the foregoing embodiment, and details are not described herein again.

The server 200 may determine an intention satisfaction weight of a cloud-side search result item based on use data of the user.

In some embodiments, the server 200 may record, in a chronological order, type identifiers of cloud-side search result items that are tapped by the user. The server 200 may set, based on a recording time of a type identifier, a value of an intention satisfaction weight of a cloud-side search result item that corresponds to the type identifier and that is in the current cloud-side search result. Specifically, the server 200 may set a maximum intention satisfaction weight for a cloud-side search result item that has a same type identifier as a type identifier most recently recorded by the server 200 and that is in the current cloud-side search result, and set a minimum intention satisfaction weight for a cloud-side search result item that has a same type identifier as a type identifier least recently recorded by the server 200 and that is in the current cloud-side search result, and so on.

In some embodiments, the server 200 may divide one day into a plurality of time periods, and record a type identifier of a cloud-side search result item that is most frequently tapped by the user in each time period. The server 200 may determine a corresponding type identifier based on a current time period. The server 200 may set a value of an intention satisfaction weight of a cloud-side search result item that corresponds to the type identifier and that is in the current cloud-side search result to a maximum value. The most frequently tapped cloud-side search result item may be a cloud-side search result item that is most recently tapped by the user, or a cloud-side search result item that is tapped for a largest quantity of times in this time period. For example, the server 200 records that the user usually watches news information during 8:00 to 8:30. The server 200 may set, during 8:00 to 8:30, a value of an intention satisfaction weight of a cloud-side search result item of an information type to a maximum value in a plurality of cloud-side search result items.

In some embodiments, when the electronic device 100 enables a positioning function, the server 200 may record a type identifier of a cloud-side search result item that is most frequently tapped by the user in each scenario (for example, a station, a cafe, or a company). The server 200 may determine a corresponding type identifier based on a scenario in which the electronic device 100 is located. The server 200 may set a value of an intention satisfaction weight of a cloud-side search result item that corresponds to the type identifier and that is in the current cloud-side search result to a maximum value. The most frequently tapped cloud-side search result item may be a cloud-side search result item that is most recently tapped by the user, or a cloud-side search result item that is tapped for a largest quantity of times in this time period. For example, the server 200 records that the user usually uses reading software at a station. When determining that the user is at the station, the server 200 may set a value of an intention satisfaction weight of a cloud-side search result item of an application type to a maximum value in a plurality of cloud-side search result items.

In some embodiments, the server 200 may use, at the same time, one or more of the foregoing methods for setting an intention satisfaction weight, and the server 200 may add values that are of the intention satisfaction weight and that are obtained based on the foregoing methods, to obtain a final value of the intention satisfaction weight.

In some embodiments, the electronic device 100 may obtain a device-cloud convergence policy from the server 200 when receiving the search box displayed by the user for entering the search word. Herein, the cloud-side search result includes only a cloud-side search result list.

In some other embodiments, the electronic device 100 may obtain the device-cloud convergence policy from the server 200 when obtaining the cloud-side search result from the server 200. To be specific, the cloud-side search result includes the cloud-side search result list and the device-cloud convergence policy.

S403: The electronic device 100 obtains, based on the search word, a device-side search result from data stored in the electronic device 100.

Specifically, the electronic device 100 may retrieve, based on the search word, in the data stored in the electronic device 100 for data related to the search word, to obtain the device-side search result.

The electronic device 100 may determine an intention satisfaction weight of a device-side search result item based on use data of the user. Specifically, refer to the description of determining, by the server 200, the intention satisfaction weight in step S402, and details are not described herein again.

It should be noted that device-side search result item includes all search result data of this type. Therefore, in the search result data, the electronic device 100 may preferentially display search result data that is most frequently tapped, search result data that is most frequently tapped in a specified time period, or search result data that is most frequently tapped in a specified scenario. For example, in the application type, the electronic device 100 may arrange, at the top in the search result, an icon of an application most frequently used by the user, and arrange, at the bottom, an icon of an application least frequently used by the user, and so on. The most frequently used application may be an application most recently used by the user, an application that is used by the user for a longest time in a specified time period (for example, one week), or an application that is tapped for a largest quantity of times by the user in a specified time period (for example, one week).

It should be noted that the electronic device 100 may perform step S402, and then perform step S403. Alternatively, the electronic device 100 may perform step S403, and then perform step S402. Alternatively, the electronic device 100 may simultaneously perform step S402 and step S403. This is not limited in this embodiment of this application.

S404: The electronic device 100 combines the device-side search result and the cloud-side search result based on the device-cloud convergence policy obtained from the server 200, and obtains and displays a search result page according to a style of the result template.

The electronic device 100 and/or the server 200 may set the device-cloud convergence policy based on a use habit of the user. The device-cloud convergence policy may include but is not limited to a scoring convergence policy, a type combination policy, and a type sorting policy.

Specifically, for the scoring convergence policy, the electronic device 100 and/or the server 200 may determine the scoring convergence policy based on a quantity of times that the user taps the device-side search result item and a quantity of times that the user taps the cloud-side search result item. For example, in preset duration (for example, one day), the quantity of times that the user taps the device-side search result item is m, where m is greater than or equal to 0. The quantity of times that the user taps the cloud-side search result item is n, where n is greater than or equal to 0. When m is greater than n, the scoring convergence policy is set to device-side sorting first. When m is less than n, the scoring convergence policy is set to cloud-side sorting first. When m is equal to n, the scoring convergence policy is set to sorting based on weights. Alternatively, when a difference between m and n is greater than zero and an absolute value of the difference is greater than a preset difference (for example, 2), the scoring convergence policy is set to device-side sorting first. When a difference between m and n is less than zero and an absolute value of the difference is greater than a preset difference, the scoring convergence policy is set to cloud-side sorting first. When a difference between m and n is greater than zero and an absolute value of the difference is less than a preset difference, or when a difference between m and n is less than zero and an absolute value of the difference is less than a preset difference, the scoring convergence policy is set to sorting based on weights. For another example, the electronic device 100 and/or the server 200 may directly set the scoring convergence policy to cloud-side sorting first, device-side sorting first, or sorting based on weights.

In some examples, the electronic device 100 provides a cloud-side search control. The cloud-side search control may be used to trigger the electronic device 100 to set the scoring convergence policy to cloud-side sorting first. In this way, when receiving an operation of the user for obtaining the cloud-side search result, the electronic device 100 preferentially displays the cloud-side search result.

In some examples, the electronic device 100 provides a device-side search control. The device-side search control may be used to trigger the electronic device 100 to set the scoring convergence policy to device-side sorting first. In this way, when receiving an operation of the user for obtaining the device-side search result, the electronic device 100 preferentially displays the device-side search result.

For the type combination policy, the electronic device 100 and/or the server 200 may determine the type combination policy based on a click-through rate (click through rate, CTR). The click-through rate is a ratio of a quantity of taps of the user to a quantity of times that the search result page is generated. If a ratio of the quantity of taps of the user to a quantity of times that the search result page is generated in a manner of combining search result items with a same combination type identifier is greater than a ratio of the quantity of taps of the user to a quantity of times that the search result page is generated in a manner of not combining the search result items with the same combination type identifier, the type combination policy is set to combining search result items with a same combination type identifier. If the ratio of the quantity of taps of the user to the quantity of times that the search result page is generated in the manner of combining the search result items with the same combination type identifier is less than the ratio of the quantity of taps of the user to the quantity of times that the search result page is generated in the manner of not combining the search result items with the same combination type identifier, the type combination policy is set to skipping combining search result items with a same combination type identifier.

For the type sorting policy, the electronic device 100 and/or the server 200 may adjust the type sorting policy in a manner of setting the scoring convergence policy.

The electronic device 100 may process the device-side search result and the cloud-side search result based on the device-cloud convergence policy, to obtain a converged search result. The electronic device 100 may generate, according to a style provided by the cloud-side search result, a search result page including the converged search result.

Specifically, the electronic device 100 may sort the device-side search result item and cloud-side search result item based on the convergence scoring policy. Then, the electronic device 100 may search, in the device-side search result item, for whether a device-side search result item whose type identifier is the same as that of the cloud-side search result item exists. If the electronic device 100 determines that the cloud-side search result item and the device-side search result item with the same type identifier exist, the electronic device 100 may combine the cloud-side search result item and the device-side search result item with the same type identifier based on the type combination policy. Then, according to the display style of the cloud-side search result item, the electronic device 100 may display the device-side search result item and the cloud-side search result item according to the style.

The following describes, with reference to specific application scenarios by using examples, the display method provided in this embodiment of this application.

For example, the cloud-side search result and the device-side search result that are obtained by the electronic device 100 in the embodiment shown in FIG. 3E are used as an example to describe detailed steps of obtaining, by a search convergence module 11, the converged search result based on the device-cloud convergence policy.

For example, when obtaining the search result items based on the search word, the electronic device 100 and the server 200 may set a weight value for each search result item based on descriptions of the foregoing step S402 and step S403. The electronic device 100 may set a weight value for the device-side search result item based on factors such as a position and a time of the electronic device 100. The server 200 may also set a weight value for the cloud-side search result item based on factors such as a position and a time of the electronic device 100.

For example, a weight value set by the electronic device 100 for the device-side search result item of the application type based on influencing factors such as a time and a position is 0.8, and a weight value set for a device-side search result item of a memo type is 0.3. A weight value set by the server 200 for the cloud-side search result item of the application type based on influencing factors such as a time and a position is 0.7, a weight value set for a cloud-side search result item of a webpage type is 0.5, and a weight value set for the cloud-side search result item of the information type is 0.2.

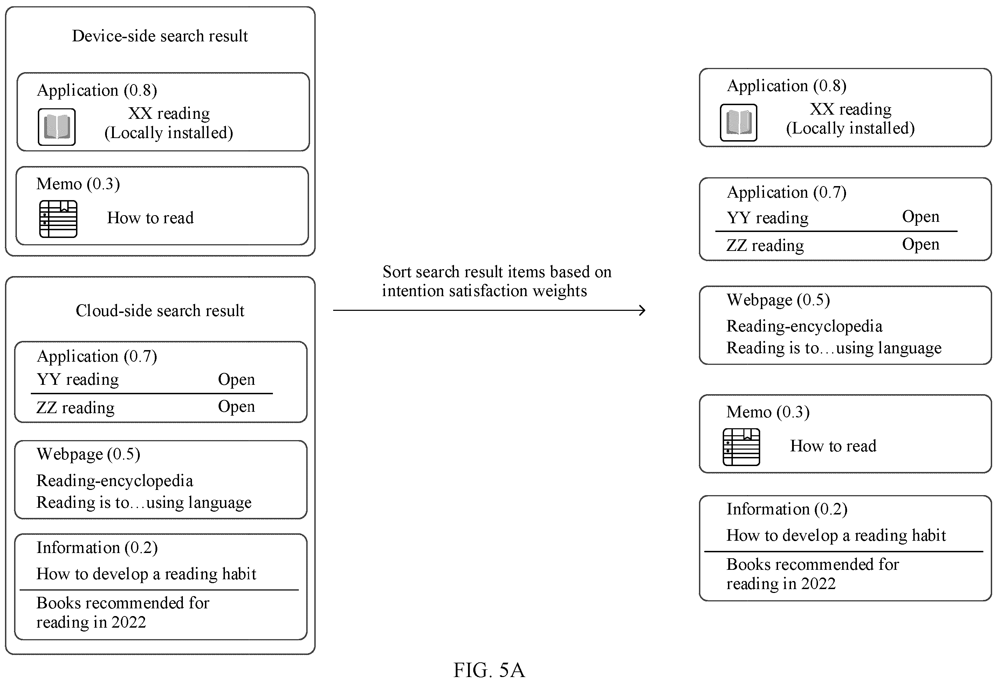

Then, the electronic device 100 may process the cloud-side search result and the device-side search result by using the device-cloud convergence policy based on the descriptions of the foregoing step S404, to obtain the search result page. As shown in FIG. 5A, the scoring convergence policy in the device-cloud convergence policy obtained by the electronic device 100 is sorting based on intention satisfaction weights. The search convergence module 11 of the electronic device 100 may arrange the device-side search result item whose intention satisfaction weight value is 0.8 at the top, arrange the cloud-side search result item whose intention satisfaction weight value is 0.7 in the second place, arrange the cloud-side search result item whose intention satisfaction weight value is 0.5 in the third place, arrange the device-side search result item whose intention satisfaction weight value is 0.3 in the fourth place, and arrange the cloud-side search result item whose intention satisfaction weight value is 0.2 in the fifth place. If the type combination policy in the device-cloud convergence policy obtained by the electronic device 100 is skipping combining search result items of a same type, the electronic device 100 may display search result items in a sequence shown on the right of an arrow in FIG. 5A.

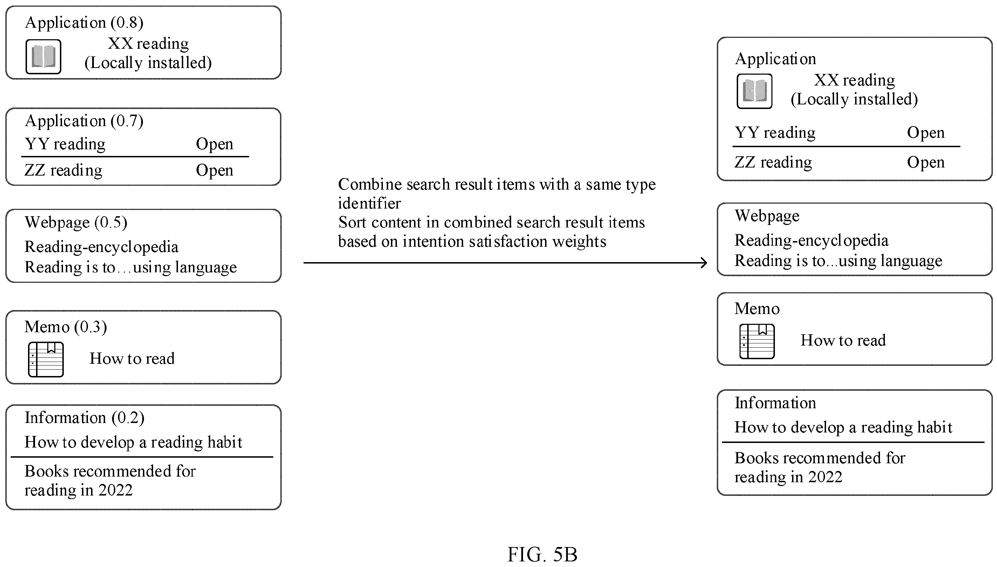

As shown in FIG. 5B, after obtaining, based on the scoring convergence policy, the sorted search result items on the left of an arrow in FIG. 5B, the electronic device 100 may process the search result items of the same type based on the type combination policy. The type combination policy obtained by the electronic device 100 is combining search result items with a same type identifier. Herein, a type identifier of the device-side search result item whose intention satisfaction weight value is 0.8 is the same as a type identifier of the cloud-side search result item whose intention satisfaction weight value is 0.7, and the electronic device 100 places type result data of the two search result items together. The type sorting policy is sorting based on weights (that is, the intention satisfaction weights) of types. Therefore, type result data of the device-side search result item is arranged before type result data of the cloud-side search result item. The electronic device 100 obtains search result items shown on the right of the arrow in FIG. 5B. The electronic device 100 may display, based on a sequence and a combination relationship shown on the right of the arrow, a search result obtained based on the search word.

Optionally, the electronic device 100 may combine a search result item with a higher intention satisfaction weight value into a search result item with a lower intention satisfaction weight value, or the electronic device 100 may combine a search result item with a lower intention satisfaction weight value into a search result item with a higher intention satisfaction weight value, or the electronic device 100 may combine the cloud-side search result item into the device-side search result item, or the electronic device 100 may combine the device-side search result item into the cloud-side search result item.

In some embodiments, the electronic device 100 and the server 200 may divide one day into a plurality of time periods, and record a type identifier of one or more search result items that are most frequently tapped by the user in each time period. When the time of the electronic device 100 and the server 200 is in a first time period, the electronic device 100 and the server 200 may obtain a type identifier corresponding to the first time period, and set a weight value for each search result item based on the type identifier. The electronic device 100 and the server 200 may set a higher weight value for a search result item whose type identifier is the same as the type identifier corresponding to the first time period, and set a lower weight value for a search result item whose type identifier is different from the type identifier corresponding to the first time period. In this way, the electronic device 100 can place, in the first time period, a search result item that belongs to a type corresponding to the first time period at the top, so that the user can view desired content more quickly in a time when the user is accustomed to viewing content of a particular type.

Optionally, the electronic device 100 may further record an identifier of an application most frequently used by the user in the first time period. After receiving, in the first time period, the search word entered by the user, the electronic device 100 may obtain a device-side search result including an icon of an application frequently used by the user in the first time period. In some examples, the electronic device 100 may display an icon of an application that is most frequently used currently before an icon of another application. The application that is most frequently used by the user may be an application that is most recently used by the user in the first time period, or an application that is used by the user for a longest time in the first time period, or an application that is opened by the user for a largest quantity of times in the first time period. In this way, the electronic device 100 can provide an icon of a frequently used application for the user, to save a time for the user to search for an icon of a related application.

For example, the electronic device 100 usually detects, during 8:00 to 8:30, that the user views local news and weather, and the electronic device 100 may record type identifiers corresponding to a time period from 8:00 to 8:30 as information and application. The electronic device 100 may further record an identifier of an application that is most frequently used by the user in the time period. For example, herein, the electronic device 100 records an identifier of a weather application and an identifier of a news application that correspond to the time period from 8:00 to 8:30.

If the electronic device 100 receives, at 8:23, the search word "Shenzhen" entered by the user, the electronic device 100 may obtain the device-side search result and the cloud-side search result based on the search word.

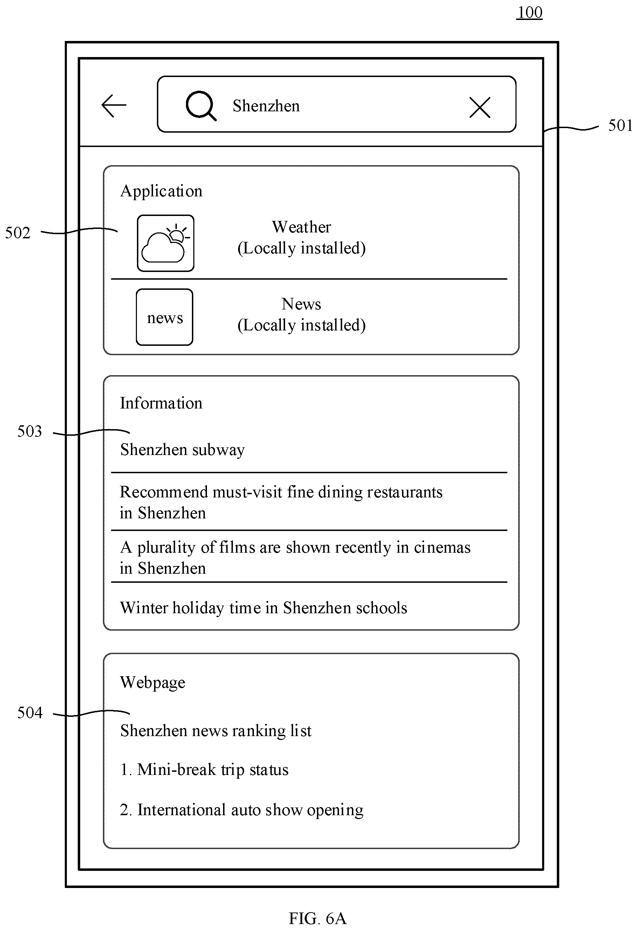

The electronic device 100 may further determine that the current time is 8:23 and is in the time period from 8:00 to 8:30. The electronic device 100 obtains that the type identifiers corresponding to the time period are information and application. In addition, identifiers of applications that are frequently used by the user in the time period are obtained. The electronic device 100 may use icons of the applications that are frequently used by the user as the search result. The electronic device 100 may sort and display the search items based on type identifiers of the search result items. Herein, the electronic device 100 may display content of the information type and content of the application type in a top area of the search result page, as shown in FIG. 6A.

As shown in FIG. 6A, the electronic device 100 displays a page 501. The page 501 includes a search result item 502, a search result item 503, and a search result item 504. The search result item 502 is of the application type, and includes an icon of the weather application and an icon of the news application. The search result item 503 is of the information type, and includes one or more pieces of information about Shenzhen. The search result item 504 is of the webpage type, and includes webpage content obtained based on the search word "Shenzhen", where the webpage content includes a Shenzhen news ranking list. Because types of the search result item 502 and the search result item 503 are the same as the types corresponding to the time period, the electronic device 100 displays the two search result items at the top of the display screen. Result items of other types are all located below the two result items. In this way, the electronic device 100 displays content of the application type at the top of the page 501, including the weather application and the news application. The user usually uses the two applications at this time, so that the user does not need to search for the two applications when needing to use the two applications. In addition, content of the information type is displayed on the page 501, so that the user can preferentially see the content of the information type. Based on a use habit of the user, the user is more likely to view the content of the information type, and the user can find desired content more quickly.

In some embodiments, the electronic device 100 and the server 200 may record each scenario of the electronic device 100 and a type identifier of a search result item that is most frequently tapped by the user in the scenario. When the electronic device 100 and the server 200 are in a first scenario, the electronic device 100 and the server 200 may obtain a type identifier corresponding to the first scenario, and set a weight value for each search result item based on the type identifier. The electronic device 100 and the server 200 may set a higher weight value for a search result item whose type identifier is the same as the type identifier corresponding to the first scenario, and set a lower weight value for a search result item whose type identifier is different from the type identifier corresponding to the first scenario. In this way, the electronic device 100 can place, in the first scenario, a search result item that belongs to a type corresponding to the first scenario at the top, so that the user can view desired content more quickly in a place in which the user is accustomed to viewing content of a particular type.

Optionally, the electronic device 100 may further record an identifier of an application most frequently used by the user in the first scenario. After receiving, in the first scenario, the search word entered by the user, the electronic device 100 may obtain a device-side search result including an icon of an application frequently used by the user in the first scenario. In some examples, the electronic device 100 may display an icon of an application that is most frequently used in a current scenario before an icon of another application. The application that is most frequently used by the user may be an application that is most recently used by the user in the first scenario, or an application that is used by the user for a longest time in the first scenario, or an application that is opened by the user for a largest quantity of times in the first scenario. In this way, the electronic device 100 can provide an icon of a frequently used application for the user, to save a time for the user to search for an icon of a related application.

Further, optionally, the electronic device 100 may further obtain an associated search result based on association between scenarios. For example, a station scenario is associated with an on-board scenario. When receiving the search word of the user in the station scenario, the electronic device 100 may provide, for the user, an icon of an application corresponding to the on-board scenario as a search result.

For example, the electronic device 100 usually detects, in a station scenario, that the user uses a passenger code application, and detects that the user usually listens to radio in a vehicle. The electronic device 100 may record a type identifier corresponding to the station scenario as application. The electronic device 100 may further record applications corresponding to the station scenario as a passenger code application and a radio application.

If the electronic device 100 receives, at 8:23, the search word "Shenzhen" entered by the user, the electronic device 100 may obtain the device-side search result and the cloud-side search result based on the search word.

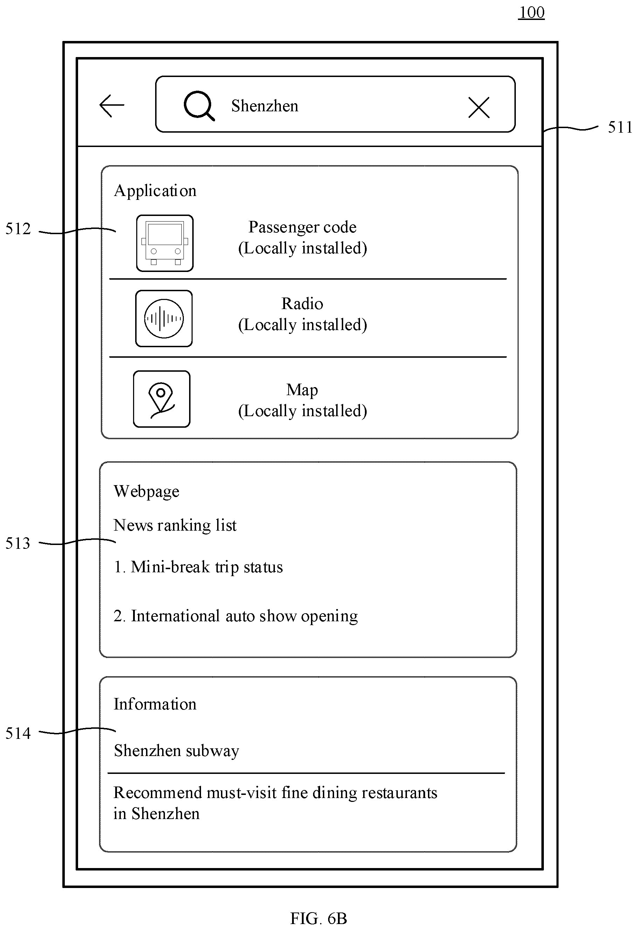

The electronic device 100 may further obtain a current position, and the electronic device 100 determines, based on the obtained position, that the position belongs to the station scenario. The electronic device 100 determines a type identifier corresponding to the station scenario as application. The electronic device 100 may sort and display the search items based on type identifiers of the search result items. Herein, the electronic device 100 may display a page 511 shown in FIG. 6B.

As shown in FIG. 6B, the electronic device 100 displays the page 511. The page 511 includes a search result item 512, a search result item 513, and a search result item 514. The search result item 512 is of the application type, and includes an icon of the passenger code application, an icon of the radio application, and an icon of a map application. The search result item 513 is of the webpage type, and includes webpage content obtained based on the search word "Shenzhen", where the webpage content includes a Shenzhen news ranking list. The search result item 514 is of the information type, and includes one or more pieces of information about Shenzhen. Because the type of the search result item 512 is the same as the type corresponding to the scenario, the electronic device 100 displays the search result item 512 at the top of the display screen, and displays a result item of another type below the result item of the application type. In this way, the electronic device 100 displays content of the application type at the top of the page 511, and displays, in the result item of the application type, an icon of an application frequently used by the user in the scenario, so that the user can preferentially see the content of the application type. Based on a use habit of the user, the user is more likely to tap the content of the application type, so that the use finds desired content more quickly.

It should be noted that, it can be learned from the embodiment shown in FIG. 6A and FIG. 6B that, when the electronic device 100 is at different times and/or in different places, search results obtained for the same search word are different.

In a possible implementation, the electronic device 100 includes the search convergence module 11, a device-side search engine 12, and a convergence rendering module 13.

The search convergence module 11 of the electronic device 100 may be configured to receive the search word entered by the user. The search convergence module 11 may be further configured to: send the search word to the device-side search engine 12, and obtain a device-side search result by using the device-side search engine 12. The search convergence module 11 may be further configured to: send the search word to the server 200, and obtain the cloud-side search result by using the server 200. The search convergence module 11 may further process the device-side search result and the cloud-side search result based on the device-cloud convergence policy, to obtain the converged search result.

The device-side search engine 12 is a search engine running on the electronic device 100. The device-side search engine 12 may receive the search word entered externally, retrieve in local data based on the search word, obtain the device-side search result, and send the device-side search result to the electronic device 100.

The convergence rendering module 13 may be configured to: receive the converged search result and the result template that are sent by the convergence rendering module 13, and render and display the converged search result.

Optionally, the server 200 includes a cloud-side search engine. The server 200 may obtain, by using the cloud-side search engine, the cloud-side search result corresponding to the search word, and send the cloud-side search result to the search convergence module 11. The cloud-side search engine is a search engine running on the server 200, and may be configured to search for online data of a public domain webpage, a private domain webpage, and each vertical domain (for example, the application type).

The following describes, with reference to the plurality of modules included in the electronic device 100, a display method provided in an embodiment of this application.

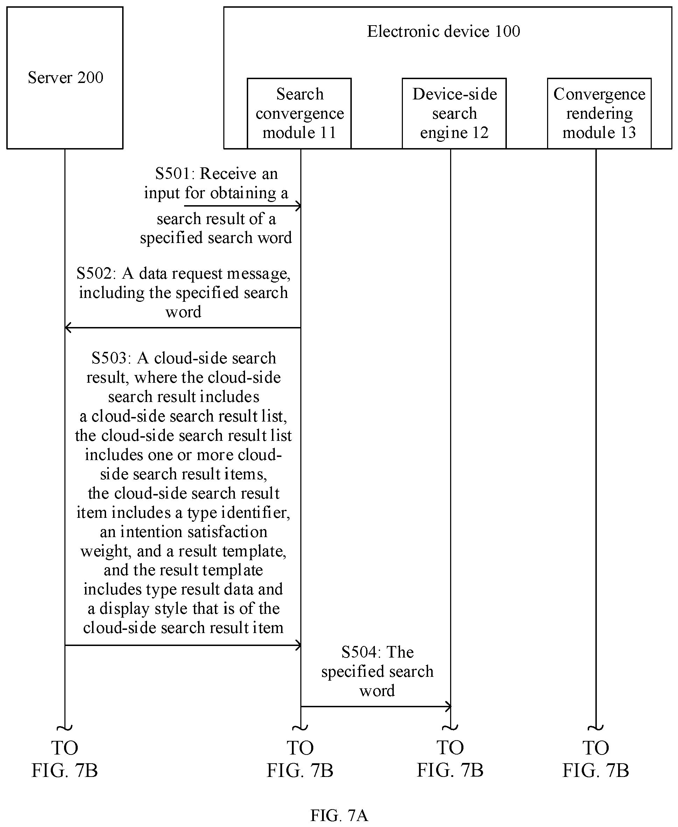

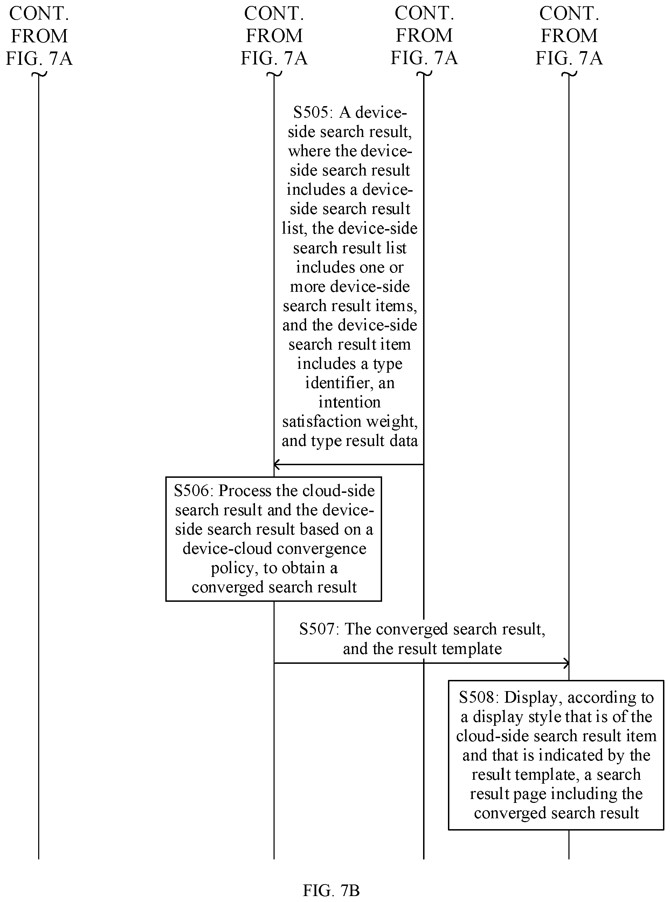

As shown in FIG. 7A and FIG. 7B, the display method includes the following steps.

S501: The search convergence module 11 receives an input for obtaining a search result of a specified search word.

S502: The search convergence module 11 sends a data request message to the server 200, where the message includes the specified search word.

For descriptions of step S501 and step S502, refer to the embodiment shown in FIG. 4. Details are not described herein again.

S503: The server 200 sends a cloud-side search result to the search convergence module 11, where the cloud-side search result includes a cloud-side search result list, the cloud-side search result list includes one or more cloud-side search result items, the cloud-side search result item includes a type identifier, an intention satisfaction weight, and a result template, and the result template includes type result data and a display style that is of the cloud-side search result item.

S504: The search convergence module 11 sends the specified search word to the device-side search engine 12.

S505: The device-side search engine 12 sends a device-side search result to the search convergence module 11, where the device-side search result includes a device-side search result list, the device-side search result list includes one or more device-side search result items, and the device-side search result item includes a type identifier, an intention satisfaction weight, and type result data.

For descriptions of the cloud-side search result and the device-side search result, refer to the foregoing embodiment. Details are not described herein again.

S506: The search convergence module 11 processes the cloud-side search result and the device-side search result based on a device-cloud convergence policy, to obtain a converged search result.

S507: The search convergence module 11 sends the converged search result and the result template to the convergence rendering module 13.

S508: The convergence rendering module 13 displays, according to a display style that is of the cloud-side search result item and that is indicated by the result template, a search result page including the converged search result.

In a possible implementation, the server 200 may update the device-cloud convergence policy in real time based on user data.

In a possible implementation, after receiving an input for displaying a specified search page, the electronic device 100 obtains the device-cloud convergence policy from the server 200 in response to the input. After receiving the input for obtaining a search result of the specified search word, the electronic device 100 may obtain the device-side search result and the cloud-side search result based on the specified search word, and process the device-side search result and the cloud-side search result based on the obtained device-cloud convergence policy, to obtain and display the converged search result. In this way, before performing a search operation, the electronic device 100 may obtain the device-cloud convergence policy from the server 200. When the user continuously searches for a plurality of specified search words, a search result obtained each time may be directly processed based on the device-cloud convergence policy. This is quicker and more convenient. In addition, because the cloud-side search result does not need to carry the device-cloud convergence policy, an amount of data sent by the server 200 to the electronic device 200 is reduced, and air interface overheads are reduced.

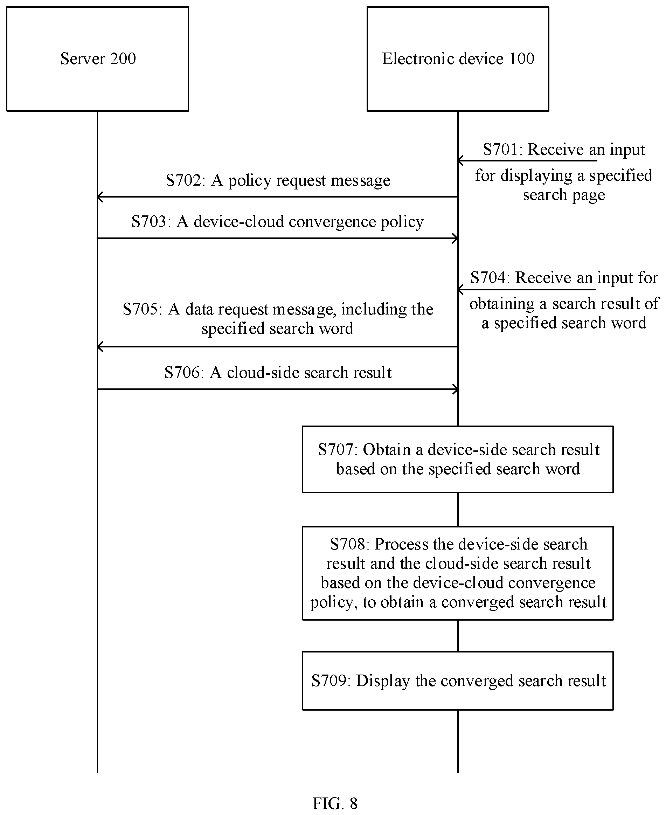

For example, as shown in FIG. 8, the display method includes the following steps.

S701: Receive an input for displaying a specified search page.

The specified search page is a page including a search box. The search box may be used to enter a specified search word. For example, the input may be an input (for example, flicking rightward) for the page 201 shown in FIG. 3A.

S702: The electronic device 100 sends a policy request message to the server 200.

S703: The server 200 sends a device-cloud convergence policy to the electronic device 100.

After receiving the policy request message, the server 200 may send the device-cloud convergence policy to the electronic device 100.

In some embodiments, the server 200 may determine the device-cloud convergence policy based on user data of the electronic device 100. The server 200 may store device-cloud convergence policies of a plurality of electronic devices. The policy request message may include identification information of the electronic device 100. The server 200 may determine, based on the identification information, the device-cloud convergence policy that belongs to the electronic device 100.

S704: The electronic device 100 receives an input for obtaining a search result of the specified search word.

S705: The electronic device 100 sends a data request message to the server 200, where the message includes the specified search word.

S706: The server 200 sends a cloud-side search result to the electronic device 100.

After receiving the data request message, the server 200 obtains the cloud-side search result based on the specified search word, and sends the cloud-side search result to the electronic device 100.

S707: The electronic device 100 obtains a device-side search result based on the specified search word.

It should be noted that the electronic device 100 may first perform step S705 and then perform step S707, or first perform step S707 and then perform step S705, or simultaneously perform the two steps.

S708: The electronic device 100 may process the device-side search result and the cloud-side search result based on the device-cloud convergence policy, to obtain a device-cloud search result.

S709: The electronic device 100 displays the converged search result.

Specifically, for specific descriptions of the foregoing steps, refer to the foregoing embodiments, and details are not described herein again.

Optionally, the server 200 may deliver the device-cloud convergence policy to the electronic device 100 at an interval of a preset time (for example, three hours).

In a possible implementation, after receiving the input for obtaining the search result of the specified search word, the electronic device 100 may obtain the device-side search result and the cloud-side search result based on the specified search word. The cloud-side search result includes a cloud-side search result list and the device-cloud convergence policy. The electronic device 100 may process the device-side search result and the cloud-side search result based on the device-cloud convergence policy, to obtain and display the converged search result. In this way, because each search operation by the user may affect setting by the server 200 for the device-cloud convergence policy, the device-cloud convergence policy is placed in the cloud-side search result, so that the electronic device 100 can obtain the latest device-cloud convergence policy from the server 200 when the search operation is performed each time.

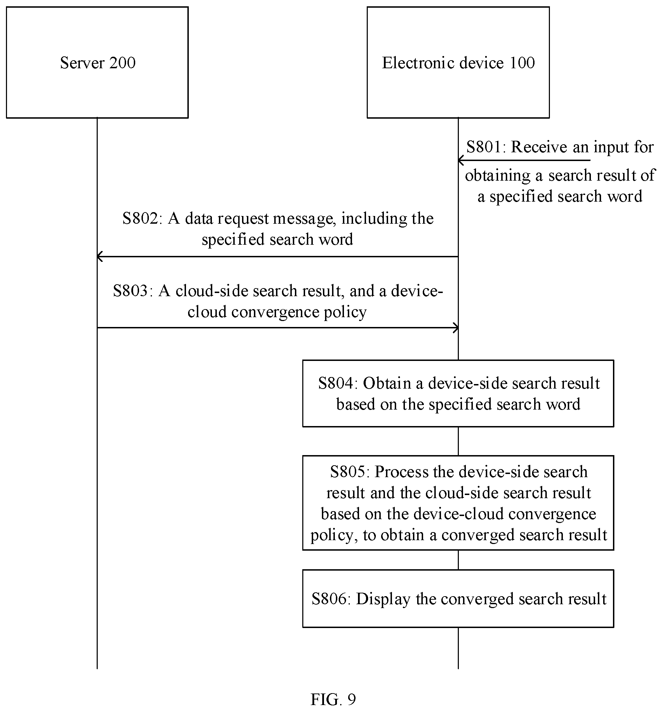

For example, as shown in FIG. 9, the display method includes the following steps.

S801: The electronic device 100 receives an input for obtaining a search result of a specified search word.

S802: The electronic device 100 sends a data request message to the server 200, where the message includes the specified search word.

Optionally, when sending the data request message to the server 200, the electronic device 100 may send the policy request message shown in FIG. 8.

Optionally, the server 200 may store device-cloud convergence policies of a plurality of electronic devices. The data request message may include identification information of the electronic device 100. The server 200 may determine, based on the identification information, a device-cloud convergence policy that belongs to the electronic device 100.

S803: The server 200 sends a cloud-side search result and the device-cloud convergence policy to the electronic device 100.

After receiving the data request message, the server 200 obtains the cloud-side search result based on the specified search word, and sends the cloud-side search result to the electronic device 100. The cloud-side search result includes the device-cloud convergence policy.

S804: The electronic device 100 obtains a device-side search result based on the specified search word.

It should be noted that the electronic device 100 may first perform step S802 and then perform step S804, or first perform step S804 and then perform step S802, or simultaneously perform the two steps.

S805: The electronic device 100 may process the device-side search result and the cloud-side search result based on the device-cloud convergence policy, to obtain a device-cloud search result.

S806: The electronic device 100 displays the converged search result.

Specifically, for specific descriptions of the foregoing steps, refer to the foregoing embodiments, and details are not described herein again.

The following describes, with reference to interface diagrams by using examples, the display method provided in embodiments of this application.

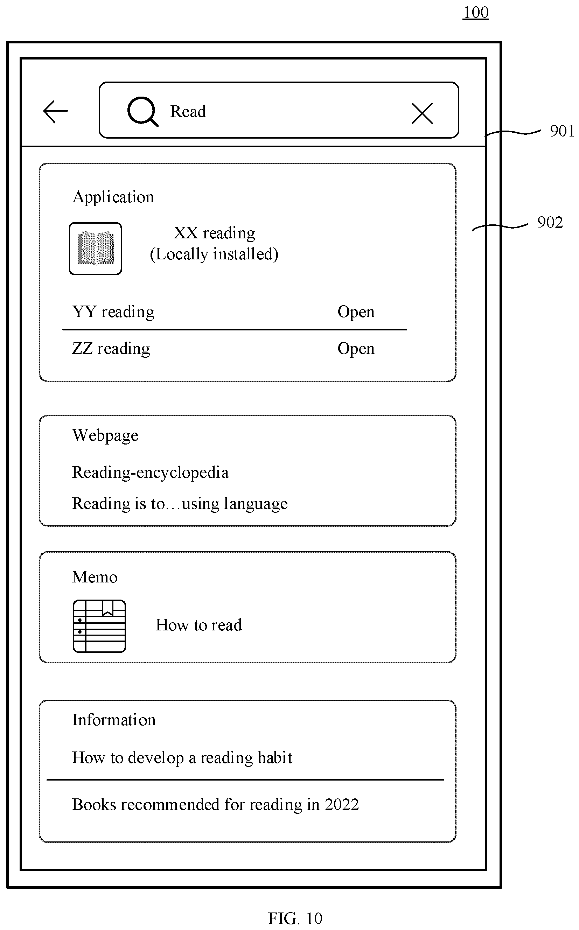

For example, when the electronic device 100 displays the page 221 shown in FIG. 3D, after receiving the input of the user for the virtual key 223A, the electronic device 100 may display, in response to the input, a page 901 shown in FIG. 10.

Specifically, the electronic device 100 may obtain, in response to the input for the virtual key 223A, the device-side search result and the cloud-side search result that are shown on the left of the arrow in FIG. 5A. The electronic device 100 may obtain, based on the device-cloud convergence policy, the converged search result shown on the right of the arrow in FIG. 5B. Then, the electronic device 100 may display the page 901 shown in FIG. 9.

As shown in FIG. 9, the page 901 includes a display area 902, and the display area 902 displays the converged search result obtained by the electronic device 100.

The following describes the electronic device provided in embodiments of this application.

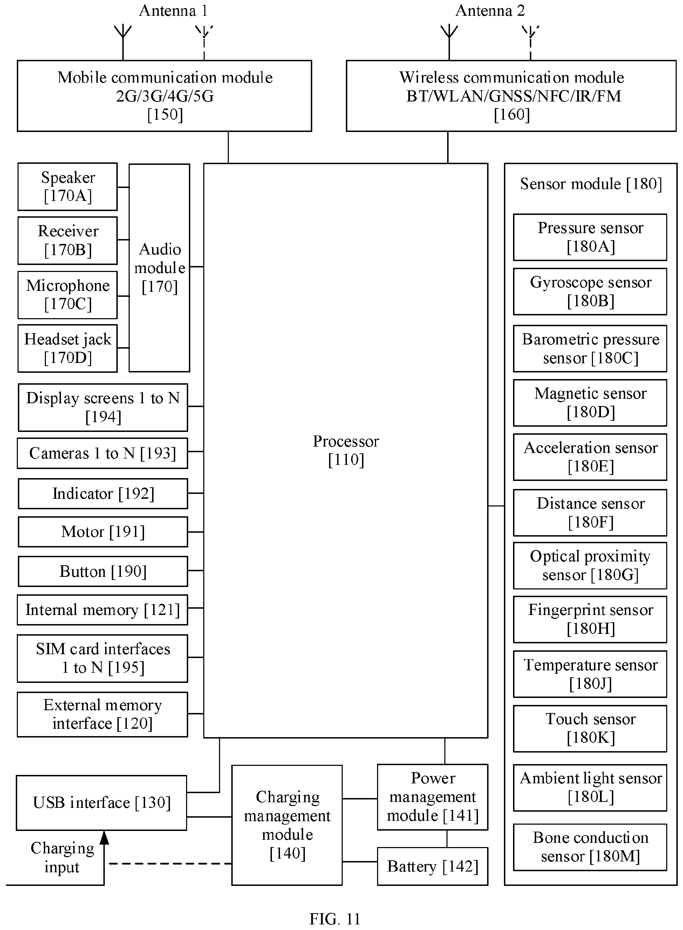

FIG. 11 is an example of a diagram of a hardware structure of an electronic device 100 according to an embodiment of this application. In this embodiment of this application, for a hardware structure of the server 200, refer to a related embodiment of the hardware structure of the electronic device 100. Details are not described herein again.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated in one or more processors.

The controller may be a nerve center and a command center of the electronic device 100. The controller may generate an operation control signal based on instruction operation code and a timing signal, to control instruction fetching and instruction execution.

A memory may be further disposed in the processor 110, and is configured to store instructions and data. In some embodiments, the memory in the processor 110 is a cache memory. The memory may store instructions or data that has just been used or cyclically used by the processor 110. If the processor 110 needs to use the instructions or the data again, the processor may directly invoke the instructions or the data from the memory. This avoids repeated access, reduces waiting time of the processor 110, and therefore improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that the interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display screen 194, the camera 193, the wireless communication module 160, and the like. The power management module 141 may be further configured to monitor parameters such as a battery capacity, a quantity of battery cycles, and a battery health status (electric leakage and impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules in the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display screen 194. In some embodiments, the modem processor may be an independent component. In some other embodiments, the modem processor may be independent of the processor 110, and is disposed in a same device as the mobile communication module 150 or another functional module.

The wireless communication module 160 may provide a solution applied to the electronic device 100 for wireless communication including wireless local area networks (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave by using the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the to-be-sent signal, and convert the signal into an electromagnetic wave for radiation by using the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 implements a display function by using the GPU, the display screen 194, the application processor, and the like. The GPU is a microprocessor for image processing, and is connected to the display screen 194 and the application processor. The GPU is configured to: perform mathematical and geometric calculation, and render an image. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N display screens 194, where N is a positive integer greater than 1.

The electronic device 100 may implement a shooting function by using the ISP, the camera 193, the video codec, the GPU, the display screen 194, the application processor, and the like.

The ISP is configured to process data fed back by the camera 193. For example, when photographing is performed, a shutter is opened, light is transmitted to a camera photosensitive element through a lens, an optical signal is converted into an electrical signal, and the camera photosensitive element transmits the electrical signal to the ISP for processing, and the electrical signal is converted into an image visible to naked eyes. The ISP may further perform algorithm optimization on noise, brightness, and the like of the image. The ISP may further optimize parameters such as exposure and a color temperature of a shooting scenario. In some embodiments, the ISP may be disposed in the camera 193.

The camera 193 is configured to capture a static image or a video. An optical image of an object is generated by using the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts the optical signal into the electrical signal, and then transmits the electrical signal to the ISP for conversion into a digital image signal. The ISP outputs the digital image signal to the DSP for processing. The DSP converts the digital image signal into an image signal in a standard format such as RGB or YUV In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor. By drawing on a structure of a biological neural network, for example, by drawing on a transmission mode between human brain neurons, the NPU quickly processes input information, and may further continuously perform self-learning. An application such as intelligent cognition, for example, image recognition, facial recognition, speech recognition, or text understanding of the electronic device 100 may be implemented by using the NPU.

The external memory interface 120 may be configured to connect to an external non-volatile memory, to expand a storage capability of the electronic device 100. The external non-volatile memory communicates with the processor 110 through the external memory interface 120, to implement a data storage function. For example, files such as music and videos are stored in the external non-volatile memory.

The internal memory 121 may be configured to store computer-executable program code. The executable program code includes instructions. The processor 810 executes various function applications and data processing of the electronic device 100 by running the instructions stored in the internal memory 121. The internal memory 121 may include a program storage area and a data storage area. The program storage area may store an operating system, an application used for at least one function (for example, a sound playing function or an image playing function), and the like. The data storage area may store data (such as audio data and an address book) and the like that are created during use of the electronic device 100. In addition, the internal memory 121 may include a high-speed random access memory, and may further include a non-volatile memory, for example, at least one magnetic disk storage device, a flash memory device, and a universal flash storage (universal flash storage, UFS).

The electronic device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The pressure sensor 180A is configured to sense a pressure signal, and may convert the pressure signal into an electrical signal. When a touch operation is performed on the display screen 194, the electronic device 100 detects intensity of the touch operation by using the pressure sensor 180A. The electronic device 100 may also calculate a touch position based on a detection signal of the pressure sensor 180A.

The gyroscope sensor 180B may be configured to determine a motion posture of the electronic device 100.

The barometric pressure sensor 180C is configured to measure barometric pressure. The magnetic sensor 180D includes a Hall sensor.

The acceleration sensor 180E may detect magnitudes of accelerations of the electronic device 100 in various directions (for example, directions pointed by three axes in x-axis, y-axis, and z-axis coordinate systems of the electronic device 100).

The distance sensor 180F is configured to measure a distance. The electronic device 100 may measure a distance in an infrared manner or a laser manner.

The optical proximity sensor 180G may include, for example, a light emitting diode (LED) and an optical detector, such as a photodiode.

The ambient light sensor 180L is configured to sense luminance of ambient light. The electronic device 100 may adaptively adjust luminance of the display screen 194 based on the sensed luminance of the ambient light.

The fingerprint sensor 180H is configured to acquire a fingerprint.

The temperature sensor 180J is configured to detect a temperature.

The touch sensor 180K is also referred to as a "touch component". The touch sensor 180K may be disposed on the display screen 194, and the touch sensor 180K and the display screen 194 constitute a touchscreen, which is also referred to as a "touch screen". The touch sensor 180K is configured to detect a touch operation performed on or near the touch sensor 180K. The touch sensor may transfer the detected touch operation to the application processor, to determine a type of a touch event. A visual output related to the touch operation may be provided by using the display screen 194. In some other embodiments, the touch sensor 180K may alternatively be disposed on a surface of the electronic device 100, and at a position different from that of the display screen 194.

The bone conduction sensor 180M may obtain a vibration signal. In some embodiments, the bone conduction sensor 180M may obtain a vibration signal of a vibration bone of a human vocal-cord part, and a blood pressure beat signal.

The button 190 may be a mechanical button, or may be a touch button. The electronic device 100 may receive a key input, and generate a key signal input related to user settings and function control of the electronic device 100.

In conclusion, the foregoing embodiments are merely intended for describing the technical solutions of this application, but not for limiting this application. Although this application is described in detail with reference to the foregoing embodiments, persons of ordinary skill in the art should understand that they can still make modifications to the technical solutions described in the foregoing embodiments or make equivalent replacements to some technical features thereof, and these modifications or replacements do not make essence of the corresponding technical solutions depart from the scope of the technical solutions of embodiments of this application.

## Claims

1. A display method, comprising:
obtaining, by the electronic device, a search word entered by a user;
sending, by the electronic device, a data query message to a server, wherein the data query message comprises the search word, and obtaining a first search result and a second search result from the server;
retrieving, by the electronic device based on the search word, in data stored in the electronic device to obtain a third search result, wherein the first search result and the third search result belong to a same type, and the second search result and the first search result belong to different types; and
displaying, by the electronic device, a search result page, wherein the search result page comprises a first area and a second area, the first area displays the first search result and the third search result, and the second area displays the second search result.

2. The method according to claim 1, wherein the method further comprises:
arranging the first area before the second area when the electronic device is in a first time period, wherein a weight of the first search result and/or a weight of the third search result in the first time period are/is greater than a weight of the second search result in the first time period.

3. The method according to claim 1 or 2, wherein the method further comprises:
arranging the first search result before the third search result when the electronic device is in the first time period, wherein the weight of the first search result in the first time period is greater than the weight of the third search result in the first time period.

4. The method according to claim 1, wherein the method further comprises:
arranging the first area before the second area when the electronic device is located at a first position, wherein a weight of the first search result and/or a weight of the third search result at the first position are/is greater than a weight of the second search result at the first position.

5. The method according to claim 1 or 4, wherein the method further comprises:
arranging the first search result before the third search result when the electronic device is located at the first position, wherein the weight of the first search result at the first position is greater than the weight of the third search result at the first position.

6. The method according to claim 1, wherein the method further comprises:
the type of the first search result and the third search result is the first type, the first area is located before the second area, and a weight of the type corresponding to the first search result and the third search result is greater than a weight of a type corresponding to the second search result.

7. The method according to any one of claims 1 to 6, wherein the first search result comprises a display style of the first search result, and the displaying, by the electronic device, a search result page specifically comprises:
displaying, by the electronic device, the search result page according to the display style of the first search result.

8. The method according to any one of claims 1 to 7, wherein the method further comprises:
obtaining, by the electronic device, a device-cloud convergence policy from the server, wherein the device-cloud convergence policy indicates the electronic device to converge the search results based on the types corresponding to the search results.

9. The method according to any one of claims 1 to 7, wherein before the receiving, by an electronic device, a search word entered by a user, the method further comprises:
receiving, by the electronic device, a first operation;
in response to the first operation, displaying, by the electronic device, a search box and sending a policy request message to the server, wherein the search box is used to enter the search word, and the policy request message indicates the server to send a device-cloud convergence policy to the electronic device, and
receiving, by the electronic device, the device-cloud convergence policy, wherein the device-cloud convergence policy indicates the electronic device to converge the search results based on the types corresponding to the search results.

10. An electronic device, comprising a display screen, one or more processors, and one or more memories, wherein the display screen, the one or more memories, and the one or more processors are coupled to each other, the one or more memories are configured to store computer program code, the computer program code comprises computer instructions, and when the one or more processors execute the computer instructions, the electronic device is enabled to perform the method according to any one of claims 1 to 9.

11. A computer-readable storage medium, comprising instructions, wherein when the instructions are run on an electronic device, the electronic device is enabled to perform the method according to any one of claims 1 to 9.
